# EUROPEAN PATENT APPLICATION

(11) **EP 4 228 300 A1**
(43) Date of publication of application: **16.08.2023**
(21) Application number: 21888658.8
(22) Date of filing: 05.11.2021
(51) Int. Cl.: H04W 12/02

(54) **COMMUNICATION METHOD, RELATED APPARATUS AND SYSTEM**

(30) Priority: 06.11.2020 CN 202011232419
(71) Applicant: Huawei Technologies Co., Ltd., Shenzhen, Guangdong 518129 (CN)
(72) Inventor: MA, Long, Shenzhen, Guangdong 518129 (CN)
(74) Representative: Körber, Martin Hans
(86) International application number: PCT/CN2021/129025
(87) International publication number: WO 2022/095966

(57) **Abstract**

Embodiments of the present invention disclose a communication method, a related apparatus, and a system, to reduce occupation of an N32c link resource in an error report sending process. The method in embodiments of the present invention includes: A first security edge protection proxy SEPP device receives a roaming message from an IP exchange IPX operator device, where the roaming message is used to implement a roaming service between the first SEPP device and a second SEPP device. The first SEPP device determines that the roaming message cannot be processed, and sends a feedback message to the IPX device, where the feedback message is used to indicate that the first SEPP device cannot process the roaming message.

## Description

This application claims priority to Chinese Patent Application No. 202011232419.1, filed with China National Intellectual Property Administration on November 6, 2020 and entitled "COMMUNICATION METHOD, RELATED APPARATUS, AND SYSTEM", which is incorporated herein by reference in its entirety.

### TECHNICAL FIELD

This application relates to the field of communication technologies, and in particular, to a communication method, a related apparatus, and a system.

### BACKGROUND

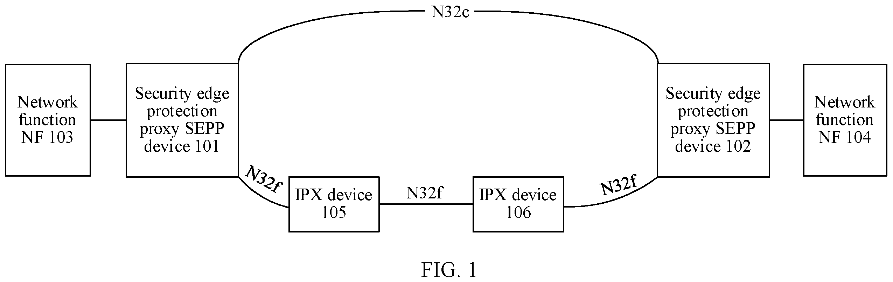

Currently, the 3rd generation partnership project (3rd generation partner project, 3GPP) defines a security edge protection proxy (security and edge protection proxy, SEPP) device as an edge security gateway of a 5G core network (5G core, 5GC). As shown in FIG. 1, a SEPP device 101 and a SEPP device 102 communicate with each other by using an N32-C (N32c for short) link and an N32-F (N32f for short) link.

In a conventional technology, the SEPP device 102 receives roaming signaling that is from the SEPP device 101 and that is forwarded by one or more IP exchange (IP exchange service, IPX) devices included on the N32f link. If the SEPP device 102 determines that the roaming signaling cannot be processed, the SEPP device 102 sends an error report to the SEPP device 101 by using the N32c link, to indicate, by using the error report, that the SEPP device 102 cannot process the roaming signaling.

In an existing technical solution, when the error report is sent between the SEPP devices, an N32c link resource needs to be maintained and used.

### SUMMARY

Embodiments of this application provide a communication method, a related apparatus, and a system, to reduce occupation of an N32c link resource in an error report sending process.

According to a first aspect, an embodiment of the present invention provides a communication method. The method includes: A first security edge protection proxy SEPP device receives a roaming message from an IP exchange IPX operator device. The roaming message is used to implement a roaming service between the first SEPP device and a second SEPP device. The first SEPP device determines that the roaming message cannot be processed, and sends a feedback message to the IPX device. The feedback message is used to indicate that the first SEPP device cannot process the roaming message.

It can be learned that, if the first SEPP device determines that the roaming message from the second SEPP device cannot be processed, the first SEPP device may send, to the second SEPP device by using an N32f link, the feedback message used to indicate that the first SEPP device cannot process the roaming message, to send an error report by sending the feedback message. Because the feedback message is transmitted by using the N32f link, it can be learned that transmission of the feedback message does not need to occupy an N32c link resource. The roaming message and the feedback message can be transmitted by using the N32f link, which reduces difficulty in indicating, by the first SEPP device to the second SEPP device, that the roaming message cannot be processed, and improves efficiency. In addition, the feedback message is sent to the second SEPP device by using the IPX device included on the N32f link. In this manner, utilization of each IPX device can be improved, and each IPX device on the N32f link can be fully used, thereby avoiding useless occupation of a system resource by the IPX device when the feedback message is transmitted by using the N32c link, improving utilization of the system resource, and avoiding a waste of the system resource.

Based on the first aspect, in an optional implementation, the method further includes: When the first SEPP device and the second SEPP device have exchanged a target shared key by using an N32c link, the first SEPP device releases the N32c link. The target shared key is used to implement secure communication between the first SEPP device and the second SEPP device.

Based on the first aspect, in an optional implementation, the method further includes: The first SEPP device sends a release request message to the second SEPP device by using the N32c link. The release request message is used to request the second SEPP device to release the N32c link.

Based on the first aspect, in an optional implementation, the method further includes: The first SEPP device releases a connection relationship between a transport layer security (transport layer security, TLS) link and the N32c link, and clears a resource related to the N32c link, to release the N32c link. After the N32c link is released, the TLS link can be released.

It can be learned that, the first SEPP device and the second SEPP device perform a feedback message transmission procedure by using the N32f link. In this case, when the N32f link is successfully established, the first SEPP device and the second SEPP device may release the N32c link, thereby effectively reducing overheads for maintaining a long-live connection of the N32c link.

Based on the first aspect, in an optional implementation, before the first security edge protection proxy SEPP device receives the roaming message from the IP exchange IPX operator device, the method further includes: The first SEPP device sends a roaming request message to the IPX device. The roaming request message is used to request the roaming service from the second SEPP device, and the roaming request message includes an address of the second SEPP device. The roaming message is a roaming response message generated by the second SEPP device based on the roaming request message.

It can be learned that in this implementation, the first SEPP device serves as a requester of the roaming service, and the second SEPP device serves as a responder of the roaming service. The first SEPP device requests the roaming service from the second SEPP device by using the roaming request message.

Based on the first aspect, in an optional implementation, the method further includes: The first SEPP device determines the corresponding address of the second SEPP device based on an N32f context identifier included in the roaming message. The first SEPP device generates the feedback message. The feedback message includes the address of the second SEPP device, and the feedback message is used to indicate that the first SEPP device cannot process the roaming response message.

It can be learned that, when the first SEPP device determines that the roaming response message cannot be processed, the first SEPP device sends the feedback message to the second SEPP device by using the N32f link. The feedback message is sent to the second SEPP device by using N32f, so that no N32c link resource needs to be occupied, thereby improving utilization of each IPX device included on the N32c link.

Based on the first aspect, in an optional implementation, the roaming message is a roaming request message used to request the roaming service from the first SEPP device, and the roaming message includes an address of the first SEPP device.

It can be learned that in this implementation, the first SEPP device serves as a responder of the roaming service, and the second SEPP device serves as a requester of the roaming service. The second SEPP device requests the roaming service from the first SEPP device by using the roaming message.

Based on the first aspect, in an optional implementation, the method further includes: If determining that the roaming message meets at least one of the following, the first SEPP device determines that the first SEPP device cannot process the roaming message: the roaming message cannot be decrypted, integrity check on the roaming message fails, integrity check on a modified block of the roaming message fails, a JSON patch program fails to be applied to the modified block of the roaming message, or a hypertext transfer protocol version 2 HTTP/2 message fails to be reconstructed based on the roaming message.

Based on the first aspect, in an optional implementation, the feedback message is further used to indicate a reason why the first SEPP device cannot process the roaming message. The reason may be one or more of the following:
the roaming message cannot be decrypted, integrity check on the roaming message fails, integrity check on a modified block of the roaming message fails, a JSON patch program fails to be applied to the modified block of the roaming message, or a hypertext transfer protocol version 2 HTTP/2 message fails to be reconstructed based on the roaming message.

Reconstructing an HTTP/2 message based on the roaming message may be extracting an HTTP/2 message from a message body of the roaming message.

Based on the first aspect, in an optional implementation, the feedback message includes the N32f context identifier, and the N32f context identifier is used to indicate the target shared key used to decrypt the feedback message.

Based on the first aspect, in an optional implementation, after the first SEPP device determines that the roaming message cannot be processed, the method further includes: The first SEPP device sends the feedback message to a network function NF.

According to a second aspect, an embodiment of the present invention provides a communication method. The method includes: A second security edge protection proxy SEPP device receives a signaling message sent by a network function device NF, and sends a roaming message to an IP exchange IPX operator device. The roaming message is used to implement a roaming service between a first SEPP device and the second SEPP device, and the roaming message includes the signaling message. The second SEPP device receives a feedback message from the IPX device. The feedback message is used to indicate that the first SEPP device cannot process the roaming message.

For description of beneficial effects in this aspect, refer to the first aspect. Details are not described again.

Based on the second aspect, in an optional implementation, the method further includes: When the first SEPP device and the second SEPP device have exchanged a target shared key by using an N32c link, the second SEPP device releases the N32c link. The target shared key is used to implement secure communication between the first SEPP device and the second SEPP device.

Based on the second aspect, in an optional implementation, the second SEPP device receives a release request message from the first SEPP device. The release request message is used to request the second SEPP device to release the N32c link.

Based on the second aspect, in an optional implementation, the second SEPP device releases the N32c link based on the release request message, and clears, on the second SEPP device side, a resource related to the N32c link. After the N32c link is released, a TLS link can be released.

Based on the second aspect, in an optional implementation, before the second security edge protection proxy SEPP device sends the roaming message to the IP exchange IPX operator device, the method further includes: The second SEPP device receives a roaming request message from the IPX device. The roaming request message is used to request the roaming service from the second SEPP device, and the roaming request message includes an address of the second SEPP device. The second SEPP device generates a roaming response message based on the roaming request message. The roaming response message is the roaming message.

Based on the second aspect, in an optional implementation, the feedback message includes the address of the second SEPP device, and the feedback message is used to indicate that the first SEPP device cannot process the roaming response message.

Based on the second aspect, in an optional implementation, the roaming message is a roaming request message used to request the roaming service from the first SEPP device, and the roaming message includes an address of the first SEPP device.

Based on the second aspect, in an optional implementation, the feedback message is further used to indicate a reason why the first SEPP device cannot process the roaming message.

Based on the second aspect, in an optional implementation, the reason is at least one of the following: the roaming message cannot be decrypted, integrity check on the roaming message fails, integrity check on a modified block of the roaming message fails, a JSON patch program fails to be applied to the modified block of the roaming message, or a hypertext transfer protocol secure/2 HTTP/2 message fails to be reconstructed based on the roaming message.

Based on the second aspect, in an optional implementation, the feedback message includes an N32f context identifier, and after the second SEPP device receives the feedback message from the IPX device, the method further includes: The second SEPP device obtains the target shared key corresponding to the N32f context identifier. The second SEPP device decrypts the feedback message by using the target shared key.

According to a third aspect, an embodiment of the present invention provides a security edge protection proxy SEPP device, including at least one processor and a memory coupled to each other. The memory stores computer program code, and the processor invokes and executes the computer program code in the memory, to enable the SEPP device to perform the method according to the first aspect or the method according to the second aspect.

According to a fourth aspect, an embodiment of the present invention provides a security edge protection proxy SEPP device, including a receiving unit, a processing unit, and a sending unit. The receiving unit is configured to perform a receiving-related step in the first aspect or the second aspect, the processing unit is configured to perform a processing-related step in the first aspect or the second aspect, and the sending unit is configured to perform a sending-related step in the first aspect or the second aspect.

According to a fifth aspect, an embodiment of the present invention provides a computer-readable storage medium. The computer-readable storage medium stores a computer program, and when the computer program is executed by a processor, the method according to the first aspect or the method according to the second aspect can be performed.

According to a sixth aspect, an embodiment of the present invention provides a communication system, including a first security edge protection proxy SEPP device and a second SEPP device. The first SEPP device is configured to perform the method according to the first aspect, and the second SEPP device is configured to perform the method according to the second aspect.

According to a seventh aspect, an embodiment of the present invention provides a communication apparatus, including at least one input device, a processor, and at least one output device. The input device is configured to perform a receiving-related step in the first aspect or the second aspect, the processor is configured to perform a processing-related step in the first aspect or the second aspect, and the output device is configured to perform a sending-related step in the first aspect or the second aspect.

According to an eighth aspect, an embodiment of the present invention provides a communication apparatus, including an input interface circuit, a logic circuit, and an output interface circuit. The logic circuit is configured to perform the method performed by the first SEPP device according to the first aspect in the embodiments of this application, or the logic circuit is configured to perform the method performed by the second SEPP device according to the second aspect in the embodiments of this application.

According to a ninth aspect, an embodiment of the present invention provides a computer program product including instructions. When the computer program product runs on a computer device, the computer device is enabled to perform the method according to the first aspect that can be performed by the first SEPP device, or the computer device is enabled to perform the method according to the second aspect that can be performed by the second SEPP device.

According to a tenth aspect, an embodiment of the present invention provides a communication system, including a first security edge protection proxy SEPP device and an IPX device. The IPX device is configured to send a roaming message to the first SEPP device. The roaming message is used to implement a roaming service between the first SEPP device and a second SEPP device. The first SEPP device is configured to perform the method according to the first aspect.

According to an eleventh aspect, an embodiment of the present invention provides a communication system, including a network function device NF and a second security edge protection proxy SEPP device. The network function device NF is configured to perform a step of sending a signaling message to the second SEPP device. The second SEPP device is configured to perform the method according to the second aspect.

In the technical solution in any one of the foregoing aspects, the address of the SEPP device may be a fully qualified domain name (fully qualified domain name, FQDN), a physical address, an IP address, or the like of the SEPP device. The address of the SEPP device may be referred to as an identifier of the SEPP device.

In the technical solution in any one of the foregoing aspects, the roaming message may be a service discovery request or a network slice request.

### BRIEF DESCRIPTION OF DRAWINGS

FIG. 1 is an example diagram of a structure of a communication system;
FIG. 2 is a schematic diagram of a 5G network architecture according to an embodiment of this application;
FIG. 3 is an example diagram of another structure of a communication system;
FIG. 4 is a flowchart of steps of a communication method according to an embodiment of this application;
FIG. 5 is a flowchart of steps of another communication method according to an embodiment of this application;
FIG. 6A and FIG. 6B are a flowchart of steps of another communication method according to an embodiment of this application;
FIG. 7 shows an example of a structure of a SEPP device according to an embodiment of this application;
FIG. 8 is a schematic diagram of a structure of a communication apparatus according to an embodiment of this application;
FIG. 9 is a schematic diagram of interfaces of a board in a communication apparatus according to an embodiment of this application; and
FIG. 10 shows an example of another structure of a SEPP device according to an embodiment of this application.

### DESCRIPTION OF EMBODIMENTS

The following clearly and completely describes technical solutions in embodiments of the present invention with reference to accompanying drawings in embodiments of the present invention. It is clear that the described embodiments are merely some rather than all of embodiments of the present invention. All other embodiments obtained by persons skilled in the art based on embodiments of the present invention without creative efforts shall fall within the protection scope of the present invention.

In the specification, claims, and accompanying drawings of this application, the terms such as "first" and "second" are intended to distinguish between similar objects but do not necessarily indicate a specific order or sequence. It should be understood that the objects used in such a way are interchangeable in proper circumstances so that embodiments described herein can be implemented in other orders than the order illustrated or described herein.

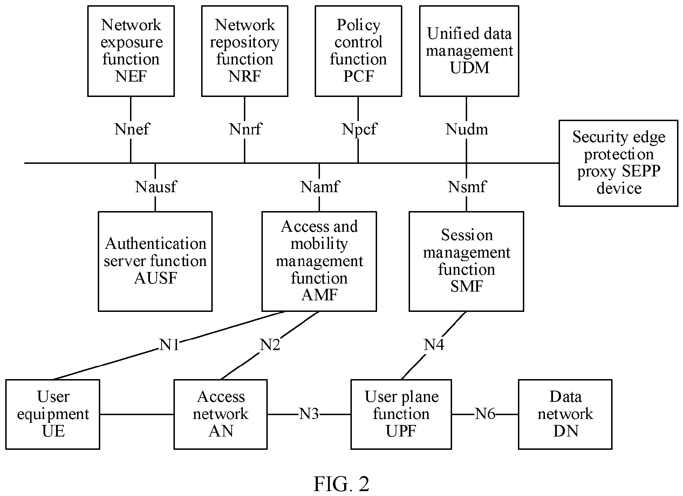

FIG. 2 is a schematic diagram of an example of a 5G network architecture according to an embodiment of this application. In a 5G network, some function devices (for example, a mobility management entity (mobility management entity, MME)) in a 4G network are split, and a service-oriented architecture is defined. In the network architecture shown in FIG. 2, a function similar to the MME in the 4G network is split into an access and mobility management function (access and mobility management function, AMF), a session management function (session management function, SMF), and the like.

The following describes the 5G network architecture.

User equipment (user equipment, UE) accesses a data network (data network, DN) by accessing an operator network, so that the UE can use a service provided by an operator or a third party on the data network.

For ease of description, in embodiments of this application, a user terminal, user equipment, a terminal device, a mobile terminal, or a terminal may be collectively referred to as UE. That is, unless otherwise specified, UE described below in embodiments of this application may be replaced with the user terminal, the user equipment, the terminal device, the mobile terminal, or the terminal. Certainly, they may also be interchanged with each other.

The access and mobility management function (access and mobility management function, AMF) is a control plane function device in a 3GPP network, and is mainly responsible for access control and mobility management when the UE accesses the operator network. A security anchor function (security anchor function, SEAF) may be deployed in the AMF, or the SEAF may be deployed in another device different from the AMF. In FIG. 2, for example, the SEAF is deployed in the AMF. When the SEAF is deployed in the AMF, the SEAF and the AMF may be jointly referred to as an AMF.

The session management function (session management function, SMF) is a control plane function device in the 3GPP network. The SMF is mainly configured to manage a packet data unit (packet data unit, PDU) session of the UE. The PDU session is a channel for transmitting a PDU. The UE and the DN may send a PDU to each other by using the PDU session. The SMF is responsible for management such as establishment, maintenance, and deletion of the PDU session.

The data network is also referred to as a packet data network (packet data network, PDN), and is a network located outside the 3GPP network. A plurality of DNs may be connected to the 3GPP network, and a plurality of services provided by an operator or a third party may be deployed in the DN.

A unified data management (unified data management, UDM) entity is also a control plane function device in the 3GPP network. The UDM is mainly configured to store subscription data, a credential (credential), a subscription permanent identifier (subscriber permanent identifier, SUPI), and the like of a subscriber (UE) in the 3GPP network. The data may be used for authentication and authorization when the UE accesses the 3GPP network of the operator. In addition, the UDM may further integrate functions of a home subscriber server (home subscriber server, HSS) and a home location register (home location register, HLR) in the network.

An authentication server function (authentication server function, AUSF) is also a control plane function device in the 3GPP network. The AUSF is mainly responsible for first-level authentication (that is, authentication performed by the 3GPP network on a subscriber of the 3GPP network).

A network exposure function (network exposure function, NEF) is also a control plane function device in the 3GPP network. The NEF is mainly configured to expose an external interface of the 3GPP network to a third party in a secure manner.

A network repository function (network repository function, NRF) is also a control plane function device in the 3GPP network, and is mainly configured to store configuration and service profile (profile) of an accessible network function (NF), and provide a network function discovery service for another network element.

A user plane function (user plane function, UPF) is a gateway for communication between the 3GPP network and the DN.

A policy control function (policy control function, PCF) is a control plane function device in the 3GPP network, and is configured to provide a PDU session policy for the SMF. The policy may include a charging, quality of service (quality of service, QoS), or authorization related policy, and the like.

An access network (access network, AN) is a subnet of the 3GPP network. The UE needs to access the 3GPP network through the AN. In a radio access scenario, the AN is also referred to as a radio access network (radio access network, RAN).

As an edge security gateway of a 5G core network (5GC), a SEPP device mainly serves as a proxy for interconnection between operator networks. A signaling message between an internal network function (NF) of the 5G core network and a roaming network is forwarded by the SEPP device.

The 3GPP network is a network that complies with 3GPP specifications. In FIG. 2, parts other than the UE and the DN may be considered as a 3GPP network. The 3GPP network is not limited to a 5G network, and may alternatively include a 2G network, a 3G network, or a 4G network. Usually, the 3GPP network is operated by an operator. In addition, N1, N2, N3, N4, N6, and the like in the architecture shown in FIG. 2 respectively represent reference points (reference point) between related entities or network functions. Nausf, Namf, and the like respectively represent service-oriented interfaces of related network functions.

Certainly, the 3GPP network and a non-3GPP network may coexist, and some network elements in the 5G network may also be used in some non-5G networks.

With reference to FIG. 1 and FIG. 2, as an edge security gateway, the SEPP device supports integrity and confidentiality protection on a transmitted message, and further supports at least one of identifying or modifying content of the transmitted message by an IPX device. Modifying the transmitted message by the SEPP device may be that the SEPP device modifies a message header of the transmitted message.

The IPX device may include a diameter routing agent (diameter routing agent, DRA) device or a domain name server (domain name server, DNS). In addition, the IPX device may be referred to as a hypertext transfer protocol (hypertext transfer protocol, HTTP) proxy.

In embodiments of this application, the SEPP device may also be referred to as a SEPP for short (for example, a first SEPP device is referred to as a first SEPP for short, a second SEPP device is referred to as a second SEPP for short, and so on). In other words, the SEPP and the SEPP device can be interchanged. The IPX device is referred to as an IPX for short (for example, a first IPX device is referred to as a first IPX for short, a second IPX device is referred to as a second IPX for short, and so on). In other words, the IPX and the IPX device can be interchanged.

When the UE roams between different operator networks, the SEPP device may be classified into types of a visited SEPP device (visit SEPP device, vSEPP device) and a home SEPP device (home SEPP device, hSEPP device).

Refer to FIG. 1. When a SEPP device 101 and a SEPP device 102 belong to different operator networks, the SEPP device 101 and the SEPP device 102 may be connected through an N32 interface. For example, in an example in which the SEPP device 101 serves as a vSEPP device and the SEPP 102 serves as an hSEPP device, the SEPP device 101 and the SEPP device 102 are directly connected through an N32-C (N32c for short) interface, a link for communication between the SEPP device 101 and the SEPP device 102 based on the N32c interface is an N32c link, and the N32c link is used to perform initial handshake and negotiation between the SEPP device 101 and the SEPP device 102 to transmit an N32 message.

Alternatively, the SEPP device 102 may be connected to an IPX device through an N32-F (N32f for short) interface, and then the IPX device is connected to the SEPP device 101 through an N32f interface. A link for communication between the SEPP device 101 and the SEPP device 102 based on the N32f interface is an N32f link. The N32f interface is configured to implement communication between a network function 103 and a network function 104. The network function 103 is a network function connected to the SEPP device 101, and the network function 104 is a network function connected to the SEPP device 102.

One or more IPX devices may be connected between the SEPP device 101 and the SEPP device 102. A quantity of IPX devices connected between the SEPP device 101 and the SEPP device 102 is not limited in embodiments. For example, as shown in FIG. 1, an IPX device 105 and an IPX device 106 are connected in sequence between the SEPP device 101 and the SEPP device 102.

It should be noted that, in embodiments, types of two connected SEPP devices (for example, the SEPP device 101 and the SEPP device 102 shown in FIG. 1) are described as optional examples, and are not limited. For example, from a perspective of service provision and service consumption, the SEPP device may be further classified into types of a consumer SEPP device (consumer's SEPP device, cSEPP) and a producer SEPP device (producer's SEPP device, pSEPP). The vSEPP device may be a pSEPP device, and the hSEPP device may be a cSEPP device. Alternatively, the vSEPP device may be a cSEPP device, and the hSEPP device may be a pSEPP device.

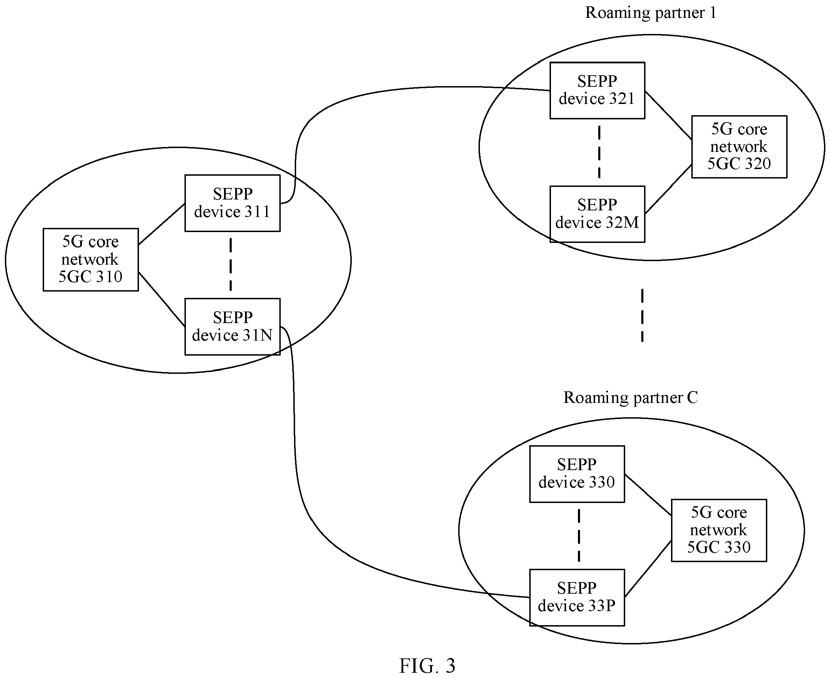

It should be noted that in the examples shown in FIG. 1 and FIG. 2, an example in which one SEPP device is deployed in one 5GC is used for description. A quantity of SEPP devices deployed in one 5GC is not limited in embodiments. For example, as shown in FIG. 3, a public land mobile network (public land mobile network, PLMN) of an operator A includes a 5GC 310 and a SEPP device 311, ..., and a SEPP device 31N that are connected to the 5GC 310. A specific value of N is not limited in embodiments provided that N is a positive integer greater than 1.

The operator A is interconnected to a plurality of other operator networks (or referred to as roaming partners for short). Different roaming partners have different PLMNs. As shown in FIG. 3, an example in which the operator A corresponds to a roaming partner 1 and a roaming partner C is used for description. A PLMN of the roaming partner 1 includes a 5GC 320 and a SEPP device 321, ..., and a SEPP device 32M that are connected to the 5GC 320. A PLMN of the roaming partner C includes a 5GC 330 and a SEPP device 331, ..., and a SEPP device 33P that are connected to the 5GC 330. Specific values of M and P are not limited in embodiments provided that M and P are positive integers greater than 1.

For example, if the operator A is interconnected to the roaming partner 1, the SEPP device 311 of the operator A communicates with the SEPP device 321 of the roaming partner 1 by using an N32c link and an N32f link. For another example, if the operator A is interconnected to the roaming partner C, the SEPP device 31N of the operator A communicates with the SEPP device 33P of the roaming partner C by using an N32c link and an N32f link. For description of the N32c link and the N32f link, refer to the foregoing description. Details are not described again.

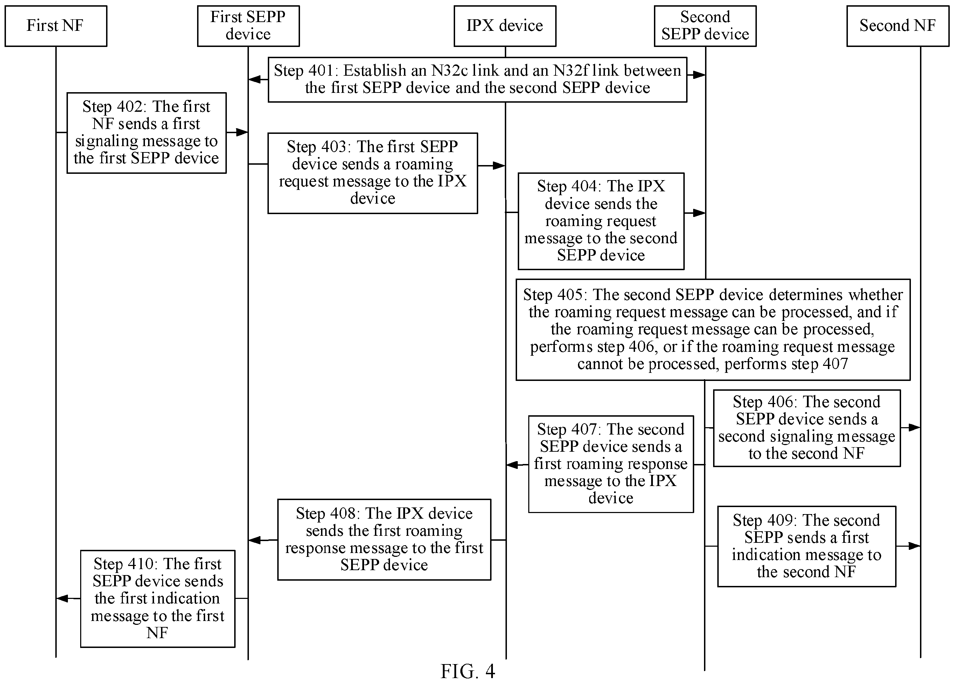

Based on the foregoing network architecture, an embodiment of this application provides a communication method. According to the communication method in this embodiment, in a process of performing an error reporting procedure between two SEPP devices, coordination between an N32c link and an N32f link is not required, thereby effectively reducing complexity of the error reporting procedure, and improving efficiency. With reference to FIG. 4, the following describes an execution process of the communication method provided in this application.

Step 401: Establish an N32c link and an N32f link between a first SEPP device and a second SEPP device.

The first SEPP device and the second SEPP device in this embodiment may belong to PLMNs of different operators, and the first SEPP device in this embodiment is a requester of a roaming service, and the second SEPP device is a responder of the roaming service.

For example, in this embodiment, the first SEPP device is a cSEPP, and the second SEPP device is a pSEPP. For another example, the first SEPP device is a vSEPP device, and the second SEPP device is an hSEPP device.

It should be noted that in another example, "first" and "second" in the first SEPP device and the second SEPP device are used to distinguish between two different SEPP devices. It should be understood that the first SEPP device and the second SEPP device are interchangeable, that is, the first SEPP device is a responder of the roaming service, and the second SEPP device is a requester of the roaming service.

Then, a purpose of establishing the N32c link between the first SEPP device and the second SEPP device is described.

When the N32c link is established between the first SEPP device and the second SEPP device, the first SEPP device and the second SEPP device may agree on a security mechanism for protecting a message transmitted over N32f.

Further, a process of establishing the N32c link between the first SEPP device and the second SEPP device is described with reference to the following steps.

Step a1: The first SEPP device sends a first request message to the second SEPP device. The first request message includes at least initial security negotiation data and an address of the first SEPP device.

The initial security negotiation data is security negotiation data supported by the first SEPP device, and the security negotiation data may be at least one of a protocol for N32 interconnect security (protocol for N32 interconnect security, PRINS) parameter or a transport layer security (transport layer security, TLS) parameter.

Specifically, the first SEPP device pre-stores an address of the second SEPP device, and when the N32c link between the first SEPP device and the second SEPP device is established, the first SEPP device may send the first request message to the second SEPP device having the address of the second SEPP device.

Optionally, the first request message may further include information about an operator to which the first SEPP device belongs, an identifier of the first SEPP device, and the like. The first request message may further carry the address of the second SEPP device.

Step a2: The second SEPP device sends a first response message to the first SEPP device.

The first response message includes a "200" status code and target security negotiation data selected by the second SEPP device.

The target security negotiation data is security negotiation data that is determined by the second SEPP device and that is supported by both the first SEPP device and the second SEPP device.

Specifically, the second SEPP device may send the first response message to the first SEPP device based on the address of the first SEPP device included in the first request message.

The first SEPP device and the second SEPP device perform steps a1 and a2 to establish the N32c link.

The first SEPP device and the second SEPP device perform initial handshake and negotiation between the first SEPP device and the second SEPP device by using the N32c link, to transmit an N32 message, and then establish the N32f link.

Step 402: A first NF sends a first signaling message to the first SEPP device.

The first NF and the first SEPP device belong to a same PLMN, and the first NF requests, by using the first signaling message, the roaming service from a PLMN to which the second SEPP device belongs. It should be noted that a specific service type of the roaming service is not limited in this embodiment.

For example, the roaming service may be any one of a roaming registration service, a roaming deregistration service, or a roaming location discovery service.

The roaming registration service means that UE belonging to the PLMN of the first SEPP device moves to the PLMN to which the second SEPP device belongs, and in this case, the first signaling message is used to request to register the UE with the PLMN of the second SEPP, so that the UE uses the roaming service of the PLMN to which the second SEPP device belongs.

The roaming deregistration service means that the UE deregisters from the PLMN to which the second SEPP device belongs, and does not use the roaming service of the PLMN to which the second SEPP device belongs.

The roaming location discovery service means that the UE belonging to the PLMN of the first SEPP moves to the PLMN to which the second SEPP device belongs, and in this case, the first signaling message is used to request the second SEPP device to send location information of the UE.

An execution time sequence between step 401 and step 402 in this embodiment is not limited.

Step 403: The first SEPP device sends a roaming request message to an IPX device.

The roaming request message in this embodiment is a roaming message used to request the roaming service from the second SEPP.

Specifically, the first signaling message is a hypertext transfer protocol version 2 (hypertext transfer protocol over secure/2, https/2) message. The first SEPP device may convert the first signaling message into a roaming request message that can be transmitted through an N32f interface. The roaming request message meets an N32f interface protocol, so that the roaming request message can be transmitted through the N32f interface.

The following describes a process in which the first SEPP device converts the first signaling message into the roaming request message.

When the first SEPP device receives the first signaling message from the first NF, the first SEPP device may convert the first signaling message into the roaming request message. Specifically, the roaming request message includes at least an encrypted first signaling message, the address of the second SEPP device, and an N32f context identifier.

Specifically, the first SEPP device may encrypt the first signaling message by using a target shared key (shared key for short), to generate the roaming request message. The following describes the target shared key.

In this embodiment, the first SEPP device and the second SEPP device invoke a transport layer security (transport layer security, TLS) protocol stack, to establish a TLS link between the first SEPP device and the second SEPP device.

When the TLS link is established between the first SEEP device and the second SEPP device, the first SEPP device and the second SEPP device may perform secure communication by using the TLS link, to establish the N32c link and the N32f link between the first SEPP device and the second SEPP device. For a specific process of establishing the N32c link and the N32f link, refer to step 401. Details are not described again.

After the TLS link is successfully established, the first SEPP device and the second SEPP device export the target shared key by using the TLS link. The target shared key is used to protect transmission of a related message on the N32f link.

In this embodiment, when the first SEPP device and the second SEPP device establish the N32f link, the first SEPP device and the second SEPP device each create an N32f context. An N32f context stored in the first SEPP device includes at least a correspondence between an N32f context identifier, the target shared key, and the address of the second SEPP device. An N32f context stored in the second SEPP device includes at least a correspondence between the N32f context identifier, the target shared key, and the address of the first SEPP device.

The first SEPP device and the second SEPP device may exchange messages by using the N32f link based on the N32f context.

The correspondence in this embodiment may be stored or recorded by using a function relationship, a table, a mapping relationship, or the like.

When the second SEPP device receives the N32f context identifier, the second SEPP device may decrypt the encrypted first signaling message by using the target shared key corresponding to the N32f context identifier, to obtain the first signaling message.

When the first SEPP device has obtained the roaming request message, the first SEPP sends the roaming request message to the second SEPP device in the following manner:
(1) If the N32f link between the first SEPP device and the second SEPP device includes one IPX device, the first SEPP device sends the roaming request message to the IPX device through an N32f interface.

Specifically, the first SEPP device pre-stores an address of the IPX device, and the first SEPP device may send the roaming request message to the IPX device having the IPX address.

The IPX device sends, based on the address of the second SEPP device included in the roaming request message, the roaming request message to the second SEPP device having the address of the second SEPP device.

(2) If the N32f link between the first SEPP device and the second SEPP device includes a plurality of IPX devices, for example, as shown in FIG. 1, the N32f link includes two IPX devices: an IPX device 105 and an IPX device 106, the first SEPP device sends the roaming request message to the IPX device 105 connected to the first SEPP device through an N32f interface.

The IPX device 106 determines, based on the address of the second SEPP device included in the roaming request message, that a next-hop IPX device for sending the roaming request message to the second SEPP device is the IPX device 106, and then the IPX device 105 may send the roaming request message to the IPX device 106.

The IPX device 106 sends, by using the address of the second SEPP device included in the roaming request message, the roaming request message to the second SEPP device having the address of the second SEPP device.

The following describes a specific format of the roaming request message. It should be clearly noted that the format of the roaming request message in this embodiment is described as an optional example, and is not limited.

The roaming request message in this embodiment mainly includes two parts: a request header and a request body.

The request header includes at least an HTTP/2 protocol version used to exchange messages between the first SEPP device and the second SEPP device. The request body includes the roaming request message.

Step 404: The IPX device sends the roaming request message to the second SEPP device.

Step 405: The second SEPP device determines whether the roaming request message can be processed, and if the roaming request message can be processed, performs step 406, or if the roaming request message cannot be processed, performs step 407.

Specifically, if the second SEPP device determines that the received roaming request message meets at least one of the following, the second SEPP device may determine that the second SEPP device cannot process the roaming request message:
the second SEPP device cannot decrypt the roaming request message, the second SEPP device fails to perform integrity check on the roaming request message, the second SEPP device fails to perform integrity check on a modified block of the roaming request message, the second SEPP device fails to apply a JSON patch program to the modified block of the roaming request message, or the second SEPP device fails to reconstruct an HTTP/2 message based on the roaming message.

That the second SEPP device cannot decrypt the roaming request message may be as follows: The second SEPP device obtains, based on the N32f context identifier included in the roaming request message, the target shared key corresponding to the N32f context identifier, and then decrypts the encrypted first signaling message by using the target shared key. If the second SEPP determines that the encrypted first signaling message cannot be decrypted based on the shared key, the second SEPP device determines that the second SEPP device cannot decrypt the roaming request message.

That the second SEPP device fails to perform integrity check on the roaming request message may be as follows: If the second SEPP device fails to perform integrity check on the roaming request message, it is determined that the roaming request message has been tampered with.

That the second SEPP device fails to perform integrity check on a modified block of the roaming request message specifically means as follows: The modified block of the roaming request message is a changed part of the roaming request message. If the second SEPP device fails to perform integrity check on the modified block of the roaming request message, it is determined that the modified block of the roaming request message has been tampered with.

That the second SEPP device fails to reconstruct an HTTP/2 message based on the roaming request message specifically means as follows: In this embodiment, to enable the PLMN to which the second SEPP device belongs to implement the roaming service requested by the roaming request message from the first SEPP device, the second SEPP device may reconstruct the roaming request message as an HTTP/2 message, so that a second NF belonging to a second PLMN of the second SEPP device can process second signaling message, to implement the roaming service requested by the first SEPP. It can be learned that if the second SEPP device cannot successfully reconstruct the roaming request message as the HTTP/2 message, the second SEPP device determines that the HTTP/2 message fails to be reconstructed.

Step 406: The second SEPP device sends the second signaling message to the second NF.

When the second SEPP device can process the roaming request message, the second SEPP device may obtain the second signaling message, and send the second signaling message to the second NF, so that the second NF performs the corresponding roaming service based on the second signaling message.

For example, if the second signaling message is used to register the UE with the second PLMN, the second NF may register the UE with the second PLMN, so that the second PLMN provides the roaming service for the UE. For another example, if the second signaling message is used to deregister the UE from the second PLMN to which the second NF belongs, the second NF may deregister the UE from the second PLMN, so that the second PLMN does not provide the roaming service for the UE.

Step 407: The second SEPP device sends a first roaming response message to the IPX device.

In this embodiment, when the second SEPP device determines that the roaming request message cannot be processed, the second SEPP device may generate the first roaming response message. The first roaming response message is a feedback message used to indicate that the second SEPP device cannot process the roaming request message.

Specifically, the first roaming response message includes a first indication message, and the first indication message is used to indicate an event that the second SEPP device cannot process the roaming request message.

Specific content of the first indication message is not limited in this embodiment, provided that both the first SEPP device and the second SEPP device have determined that the first indication message is used to indicate an event that the roaming request message cannot be processed.

To reduce complexity of indicating, to the first SEPP device, that the second SEPP device cannot process the roaming request message and improve efficiency, in this embodiment, the first roaming response message is transmitted by using the N32f link between the first SEPP device and the second SEPP device. It can be learned that the first roaming response message in this embodiment meets the N32f interface protocol, so that the first roaming response message can be transmitted through an N32f interface.

In this embodiment, the second SEPP device returns the first roaming response message along a same path of receiving the roaming request message. For example, as shown in FIG. 1, if the first SEPP device 101 sends the roaming request message to the second SEPP device 102 by using the IPX device 105 and the IPX device 106 in sequence, the second SEPP device 102 returns the first roaming response message to the first SEPP device 101 by using the IPX device 106 and the IPX device 105 in sequence.

Specifically, the second SEPP device determines a target IPX device. The target IPX device is an IPX device that sends the roaming request message to the second SEPP device. In this embodiment, the target IPX device is the IPX device 106.

When the second SEPP device sends the first roaming response message to the first SEPP device, the first roaming response message may be sent to the target IPX, so that the first roaming response message is returned to the first SEPP device along the same path. It can be learned that, when the target IPX device (that is, the IPX device 106) receives the first roaming response message, the IPX device 106 may send the first roaming response message to the IPX device 105, and the IPX device 105 may send the first roaming response message to the first SEPP device.

Step 408: The IPX device sends the first roaming response message to the first SEPP device.

When the first SEPP device receives the first roaming response message, the first SEPP device may determine, based on the first indication message included in the first roaming response message, that the second SEPP device cannot process the roaming request message.

Optionally, when the first roaming response message includes a second indication message, the first SEPP device may perform corresponding processing. For example, if the second indication message is used to indicate that the second SEPP device cannot decrypt the roaming request message, the first SEPP device may re-encrypt the first signaling message based on the shared key, to regenerate a roaming request message, and send the regenerated roaming request message to the second SEPP by using the N32f link.

Step 409: The second SEPP sends the first indication message to the second NF.

Step 409 in this embodiment is an optional step. If this step is performed, an execution time sequence between step 409 and step 407 is not limited in this embodiment.

When receiving the first indication message, the second NF may determine that the second SEPP device cannot process the roaming request message from the first SEPP device, and then determine that the second SEPP device cannot implement the roaming service between the second SEPP device and the first SEPP device.

Optionally, the second SEPP may further send the second indication message to the second NF. The second indication message is used to indicate a reason why the second SEPP device cannot process the roaming request message. The second NF may determine, based on the second indication message, the specific reason why the second SEPP device cannot process the roaming request message.

Step 410: The first SEPP device sends the first indication message to the first NF.

This step is an optional step. Specifically, the first SEPP device may obtain the first indication message from the first roaming response message, and convert a format of the first indication message into an https/2 message, so that the first NF can receive and process the first indication message.

Optionally, if the first roaming response message includes the second indication message, the first SEPP device may also send the second indication message to the first NF. For a specific sending process, refer to the process of sending the first indication message. Details are not described again.

According to the communication method in this embodiment, if the second SEPP device determines that the roaming request message from the first SEPP device cannot be processed, the second SEPP device may send, to the first SEPP device by using the N32f link, the first roaming response message used to indicate that the second SEPP device cannot process the roaming request message. Because the first roaming response message is transmitted by using the N32f link, it can be learned that transmission of the first roaming response message does not need to occupy an N32c link resource. The roaming request message and the first roaming response message can be transmitted by using the N32f link, which reduces difficulty in indicating, by the second SEPP device to the first SEPP device, that the roaming request message cannot be processed, and improves efficiency.

In addition, the IPX device included on the N32f link sends the first roaming response message to the first SEPP device. In this manner, utilization of each IPX device can be improved, and each IPX device on the N32f link can be fully used, thereby avoiding useless occupation of a system resource by the IPX device when the first roaming response message is transmitted by using the N32c link, improving utilization of the system resource, and avoiding a waste of the system resource.

A specific message format of the first roaming response message is not limited in this embodiment, provided that the first roaming response message is used to indicate, to the first SEPP device, that the second SEPP device cannot process the roaming request message. The following describes the first roaming response message in detail with reference to specific examples.

### Example 1

The first roaming response message in this example mainly includes two parts: a response header and a response body.

The response header may include a status code. The status code includes three decimal digits, the first decimal digit defines a type of the status code, and the last two digits have a classification function. Different status codes represent different meanings. A specific value of the status code included in the first roaming response message in this embodiment may be "200" or "400", and is not limited in this embodiment.

The response body includes an event used to indicate that the second SEPP device cannot process the roaming request message.

Optionally, to help the first SEPP to determine a reason why the second SEPP device cannot process the roaming request message, the response header or the response body may further include a second indication message, and the second indication message indicates the reason why the second SEPP device cannot process the roaming request message. In this embodiment, an example in which the response body includes the second indication message is used for description.

Specifically, the second SEPP device may pre-determine a correspondence between different fields and reasons why the second SEPP device cannot process the roaming request message. Content included in each field is not limited in this embodiment, provided that the first SEPP device and the second SEPP device can agree on a reason that is indicated by each field and why the roaming request message cannot be processed.

For example, if the second SEPP device determines that the reason why the roaming request message cannot be processed is that the roaming request message cannot be decrypted, the second SEPP device obtains a first field used to indicate that the roaming request message cannot be decrypted, and the second SEPP device may set the first field in the second indication message.

For another example, if the second SEPP device determines that the reason why the roaming request message cannot be processed is that integrity check on the modified block of the roaming request message fails, the second SEPP device obtains a second field used to indicate that integrity check on the modified block of the roaming message fails, and the second SEPP device may set the second field in the second indication message.

### Example 2

In this embodiment, the first SEPP device and the second SEPP device may pre-agree on a format of the first roaming response message, provided that the first roaming response message can be transmitted by using the N32f link. For description of specific content of the first roaming response message, refer to the foregoing description. Details are not described again.

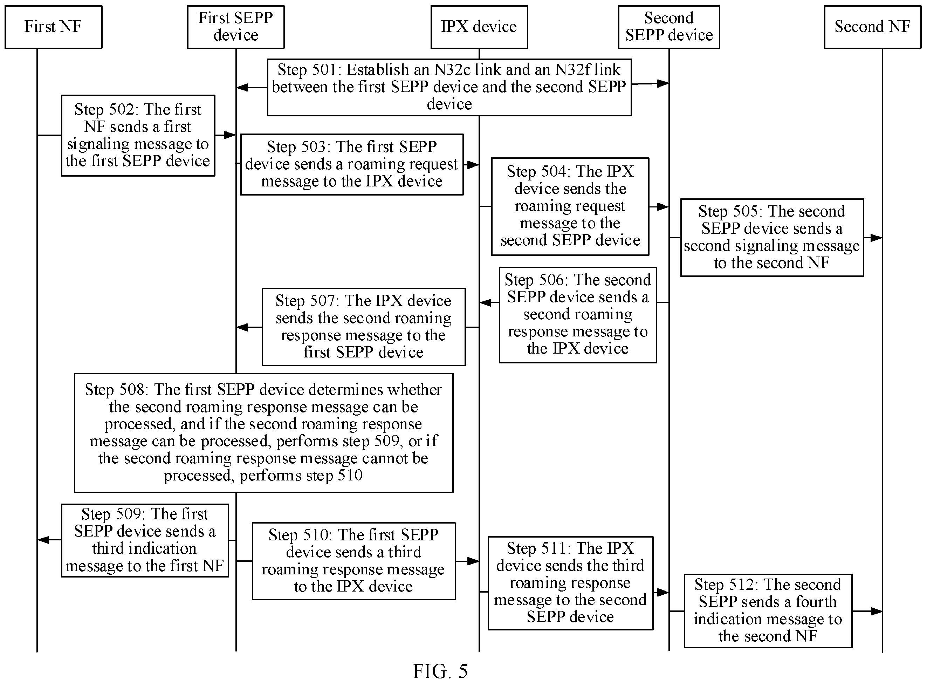

The following describes, with reference to FIG. 5, another embodiment of the communication method provided in this application. In the embodiment shown in FIG. 4, how the second SEPP device indicates, to the first SEPP when the second SEPP device cannot process the roaming request message, the event that the second SEPP device cannot process the roaming request message is described. The embodiment shown in FIG. 5 describes how the first SEPP device indicates, to the second SEPP device when the second SEPP device can successfully process the roaming request message, an event that the first SEPP device cannot process the roaming response message if the first SEPP device cannot process the roaming response message, which is specifically described as follows:

Step 501: Establish an N32c link and an N32f link between a first SEPP device and a second SEPP device.

Step 502: A first NF sends a first signaling message to the first SEPP device.

Step 503: The first SEPP device sends a roaming request message to an IPX device.

Step 504: The IPX device sends the roaming request message to the second SEPP device.

For description of a specific execution process of step 501 to step 504 in this embodiment, refer to step 401 to step 404 shown in FIG. 4. The specific execution process is not described in this embodiment.

Step 505: The second SEPP device sends a second signaling message to a second NF.

For description of an execution process of step 505 in this embodiment, refer to step 406 shown in FIG. 4. A specific execution process is not described in this embodiment.

Step 506: The second SEPP device sends a second roaming response message to the IPX device.

Step 507: The IPX device sends the second roaming response message to the first SEPP device.

In this embodiment, the second roaming response message is a roaming message used to implement a roaming message between the first SEPP device and the second SEPP device.

The second SEPP device can successfully process the roaming request message from the first SEPP device. It can be learned that the second roaming response message in this embodiment includes a third indication message, and the third indication message is used to indicate that the second SEPP device can successfully process the roaming request message.

The second roaming response message in this embodiment includes the third indication message. In this embodiment, for a process in which the second SEPP device sends the second roaming response message to the first SEPP device, refer to the process shown in step 408 in FIG. 4 in which the second SEPP device sends the first roaming response message to the first SEPP device. Details are not described again.

For description of a specific format of the second roaming response message in this embodiment, refer to the embodiment shown in FIG. 4. Details are not described again in this embodiment.

Step 508: The first SEPP device determines whether the second roaming response message can be processed, and if the second roaming response message can be processed, performs step 509, or if the second roaming response message cannot be processed, performs step 510.

Specifically, if the first SEPP device determines that the received second roaming response message meets at least one of the following, the first SEPP device may determine that the first SEPP device cannot process the roaming request message:
the first SEPP device cannot decrypt the second roaming response message, the first SEPP device fails to perform integrity check on the second roaming response message, the first SEPP device fails to perform integrity check on a modified block of the second roaming response message, the first SEPP device fails to apply a JSON patch program to the modified block of the second roaming response message, or the first SEPP device fails to reconstruct an HTTP/2 message based on the roaming message. For specific description of cases in which the first SEPP device cannot process the roaming request message, refer to the embodiment shown in FIG. 4. Details are not described again in this embodiment.

Step 509: The first SEPP device sends the third indication message to the first NF.

When the first SEPP device can process the second roaming response message, the first SEPP device may obtain the third indication message, and send the third indication message to the first NF, so that the first NF determines that the second NF can implement a roaming service requested by the first NF. For description of the roaming service, refer to the embodiment shown in FIG. 4. Details are not described again.

Step 510: The first SEPP device sends a third roaming response message to the IPX device.

In this embodiment, when the first SEPP device determines that the second roaming response message cannot be processed, the first SEPP device may generate the third roaming response message. The third roaming response message includes a fourth indication message, and the fourth indication message is used to indicate an event that the first SEPP device cannot process the second roaming response message.

For description of a specific format of the third roaming response message, refer to the description of the format of the first roaming response message shown in FIG. 4. Details are not described again.

Step 511: The IPX device sends the third roaming response message to the second SEPP device.

In this embodiment, the first SEPP device returns the third roaming response message along a same path of receiving the second roaming response message. For example, as shown in FIG. 1, if the second SEPP device 102 sends the second roaming response message to the first SEPP device 101 by using the IPX device 106 and the IPX device 105 in sequence, the first SEPP device 101 sends the third roaming response message to the second SEPP device 102 by using the IPX device 105 and the IPX device 106 in sequence.

Specifically, the first SEPP device stores a correspondence between an N32f context identifier, a target shared key, and an address of the second SEPP device, and the first SEPP device may determine the corresponding address of the second SEPP device based on the N32f context identifier included in the second roaming response message. The first SEPP device sends the third roaming response message to the second SEPP device based on the address of the second SEPP device.

It can be learned that, when the second SEPP device receives the third roaming response message, it may be determined that the first SEPP device cannot process the second roaming message.

For description of content and a format of the fourth indication message, refer to the description of the first indication message in the embodiment shown in FIG. 4. Details are not described again.

To reduce complexity of indicating, to the second SEPP device, that the first SEPP device cannot process the second roaming response message and improve efficiency, in this embodiment, the third roaming response message is transmitted by using the N32f link between the first SEPP device and the second SEPP device. It can be learned that the third roaming response message in this embodiment meets an N32f interface protocol, so that the third roaming response message can be transmitted through an N32f interface.

Step 510 and step 511 in this embodiment are optional steps. That is, when the first SEPP device determines that the second roaming response message cannot be processed, the first SEPP device may send the third indication message to the first NF, but does not send the third roaming response message to the second SEPP device.

Step 512: The second SEPP sends the fourth indication message to the second NF.

This step is an optional step. Specifically, the second SEPP device parses out the fourth indication message from the third roaming response message, and converts a format of the fourth indication message into an https/2 message, so that the second NF can receive and process the fourth indication message. For a specific processing process, refer to the process in which the first NF processes the first indication message shown in FIG. 4. Details are not described again in this embodiment.

According to the communication method in this embodiment, if the first SEPP device determines that the second roaming response message from the second SEPP device cannot be processed, the first SEPP device may send, to the second SEPP device by using the N32f link, the third roaming response message used to indicate that the first SEPP device cannot process the second roaming response message. Because the third roaming response message is transmitted by using the N32f link, it can be learned that transmission of the third roaming response message does not need to occupy an N32c link resource. The third roaming response message can be transmitted by using the N32f link, which reduces difficulty in indicating, by the first SEPP device to the second SEPP device, that the second roaming response message cannot be processed, and improves efficiency.

In addition, the third roaming response message is sent to the second SEPP device by using the IPX device included on the N32f link. In this manner, utilization of each IPX device can be improved, and each IPX device on the N32f link can be fully used, thereby avoiding useless occupation of a system resource by the IPX device when the third roaming response message is transmitted by using the N32c link, improving utilization of the system resource, and avoiding a waste of the system resource.

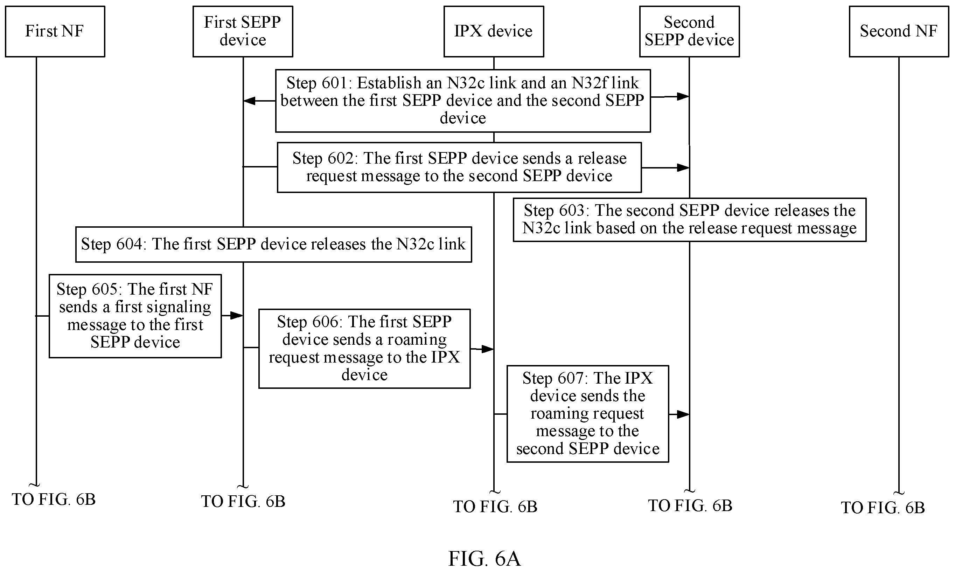

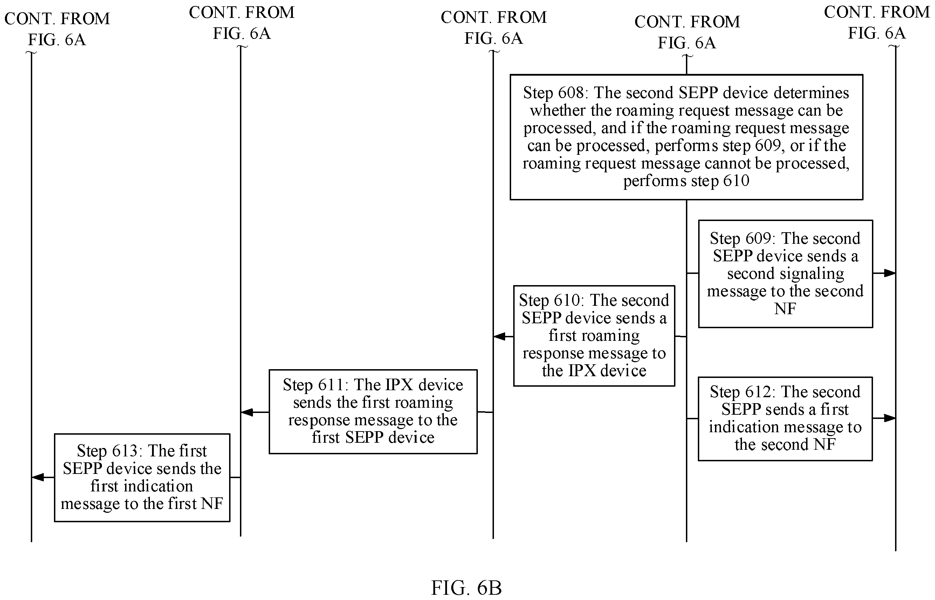

Based on the embodiments shown in FIG. 4 and FIG. 5, the following describes, with reference to FIG. 6A and FIG. 6B, a process of reducing communication system overheads.

Step 601: Establish an N32c link and an N32f link between a first SEPP device and a second SEPP device.

For a specific execution process of step 601 in this embodiment, refer to step 401 shown in FIG. 4. The specific execution process is not described again.

Step 602: The first SEPP device sends a release request message to the second SEPP device.

Specifically, in this embodiment, when the N32f link has been successfully established between the first SEPP device and the second SEPP device, it can be learned from the embodiments shown in FIG. 4 and FIG. 5 that an error reporting procedure may be performed between the first SEPP device and the second SEPP device based on the N32f link. To reduce communication system overheads, the N32c link may be released in this embodiment.

To release the N32c link, the first SEPP device sends the release request message to the second SEPP device by using the N32c link. The release request message is used to request the second SEPP device to release the N32c link.

Optionally, the release request message includes at least an address of the second SEPP device and a fifth indication message. The fifth indication message is used to indicate an event that the second SEPP device releases the N32c link.

Step 603: The second SEPP device releases the N32c link based on the release request message.

In this embodiment, when receiving the release request message, the second SEPP device may determine, based on the fifth indication message, to release the N32c link.

Specifically, the second SEPP device clears, on the second SEPP device side based on the release request message N32c link, a resource related to the N32c link. After the N32c link is released, a TLS link is also released.

Step 604: The first SEPP device releases the N32c link.

An execution time sequence between step 604 and step 602 is not limited in this embodiment. When the N32f link is successfully established, the first SEPP device may release a connection relationship between the TLS link and the N32c link, and clear, on the second SEPP device side, the resource related to the N32c link, to release the N32c link.

Step 605: A first NF sends a first signaling message to the first SEPP device.

An execution time sequence between step 605 and step 602 to step 604 is not limited in this embodiment.

Step 606: The first SEPP device sends a roaming request message to an IPX device.

Step 607: The IPX device sends the roaming request message to the second SEPP device.

Step 608: The second SEPP device determines whether the roaming request message can be processed, and if the roaming request message can be processed, performs step 609, or if the roaming request message cannot be processed, performs step 610.

Step 609: The second SEPP device sends a second signaling message to a second NF.

Step 610: The second SEPP device sends a first roaming response message to the IPX device.

Step 611: The IPX device sends the first roaming response message to the first SEPP device.

Step 612: The second SEPP sends a first indication message to the second NF.

Step 613: The first SEPP device sends the first indication message to the first NF.

For description of a specific execution process of step 605 to step 613 in this embodiment, refer to step 402 to step 410 shown in FIG. 4. Details are not described again in this embodiment.

It can be learned that, according to the method in this embodiment, the first SEPP device and the second SEPP device may perform an error reporting procedure by using the N32f link. In this case, when the N32f link is successfully established, the first SEPP device and the second SEPP device may release the N32c link, thereby effectively reducing overheads for maintaining a long-live connection of the N32c link.

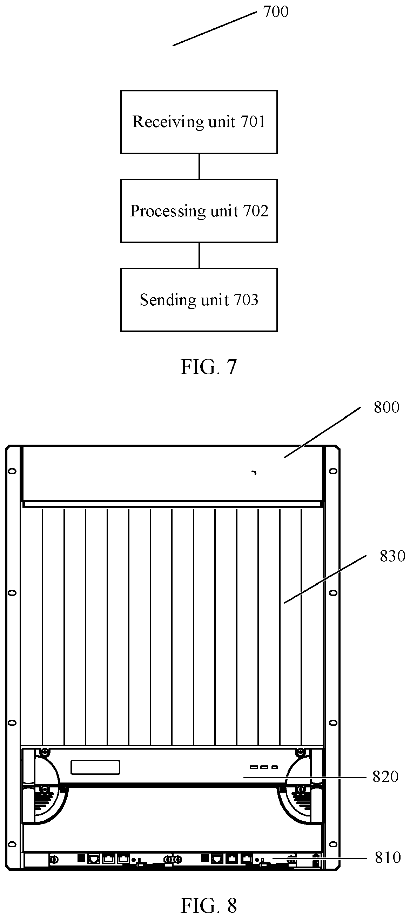

With reference to FIG. 7, the following describes a structure of a SEPP device configured to perform the foregoing method embodiment.

The SEPP device 700 specifically includes a receiving unit 701, a processing unit 702, and a sending unit 703.

If the SEPP device 700 serves as a first SEPP device,
the receiving unit 701 is configured to receive a roaming message from an IP exchange IPX operator device, where the roaming message is used to implement a roaming service between the first SEPP device and a second SEPP device;
the processing unit 702 is configured to determine that the roaming message cannot be processed; and
the sending unit 703 is configured to send a feedback message to the IPX device, where the feedback message is used to indicate that the roaming message cannot be processed.

The receiving unit 701, the processing unit 702, and the sending unit 703 cooperate with each other to implement the communication method that is performed by the first SEPP device and that is provided in the foregoing embodiment. For a specific implementation process and beneficial effects, refer to the description of the foregoing aspects.

Optionally, the processing unit 702 is configured to: when the first SEPP device and the second SEPP device have exchanged a target shared key by using an N32c link, release, by the first SEPP device, the N32c link. The target shared key is used to implement secure communication between the first SEPP device and the second SEPP device.

Optionally, the sending unit 703 is configured to send a roaming request message to the IPX device. The roaming request message is used to request the roaming service from the second SEPP device, and the roaming request message includes an address of the second SEPP device. The roaming message is a roaming response message generated by the second SEPP device based on the roaming request message.

Optionally, the receiving unit 701 is configured to obtain the feedback message. The feedback message includes the address of the second SEPP device, and the feedback message is used to indicate that the first SEPP device cannot process the roaming response message.

Optionally, the processing unit 702 is configured to: if determining that the roaming message meets at least one of the following, determine that the first SEPP device cannot process the roaming message:
the roaming message cannot be decrypted, integrity check on the roaming message fails, integrity check on a modified block of the roaming message fails, a JSON patch program fails to be applied to the modified block of the roaming message, or a hypertext transfer protocol secure/2 HTTP/2 message fails to be reconstructed based on the roaming message.

Optionally, the feedback message is further used to indicate a reason why the first SEPP device cannot process the roaming message.

Optionally, the feedback message includes an N32f context identifier, and the N32f context identifier is used to indicate the target shared key used to decrypt the feedback message.

Optionally, the sending unit 703 is further configured to send the feedback message to a network function NF.

If the SEPP device 700 serves as a second SEPP device,
the sending unit 703 is configured to send a roaming message to an IP exchange IPX operator device, where the roaming message is used to implement a roaming service between a first SEPP device and the second SEPP device; and
the receiving unit 701 is configured to receive a feedback message from the IPX device, where the feedback message is used to indicate that the first SEPP device cannot process the roaming message.

The receiving unit 701, the processing unit 702, and the sending unit 703 cooperate with each other to implement the communication method that is performed by the second SEPP device and that is provided in the foregoing embodiment. For a specific implementation process and beneficial effects, refer to the description of the foregoing aspects.

Optionally, the processing unit 702 is configured to: when the first SEPP device and the second SEPP device have exchanged a target shared key by using an N32c link, release the N32c link. The target shared key is used to implement secure communication between the first SEPP device and the second SEPP device.

Optionally, the receiving unit 701 is configured to receive a roaming request message from the IPX device, where the roaming request message is used to request the roaming service from the second SEPP device, and the roaming request message includes an address of the second SEPP device; and
the processing unit 702 is configured to generate a roaming response message based on the roaming request message, where the roaming response message is the roaming message.

Optionally, the feedback message includes the address of the second SEPP device, and the feedback message is used to indicate that the first SEPP device cannot process the roaming response message.

Optionally, the roaming message is a roaming request message used to request the roaming service from the first SEPP device, and the roaming message includes an address of the first SEPP device.

Optionally, the feedback message is further used to indicate a reason why the first SEPP device cannot process the roaming message.

The reason is at least one of the following:
the roaming message cannot be decrypted, integrity check on the roaming message fails, integrity check on a modified block of the roaming message fails, a JSON patch program fails to be applied to the modified block of the roaming message, or a hypertext transfer protocol secure/2 HTTP/2 message fails to be reconstructed based on the roaming message.

Optionally, the processing unit 702 is configured to: obtain the target shared key corresponding to the N32f context identifier, and decrypt the feedback message by using the target shared key.

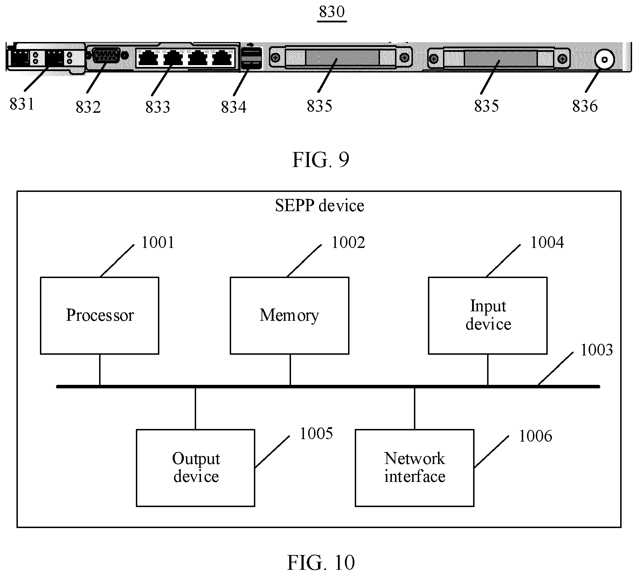

With reference to FIG. 8 and FIG. 9, the following describes a structure of a communication apparatus provided in this application. FIG. 8 is an example diagram of a structure of a communication apparatus according to an embodiment of this application. FIG. 9 is an example diagram of interfaces of a communication board 830 in a communication apparatus according to an embodiment of this application.

The communication apparatus mainly includes a cabinet 800 and a communication board 830 installed in the cabinet. The communication board 830 mainly includes a circuit board, and a chip and an electronic component that are installed on the circuit board, and may provide a communication service. A quantity of communication boards 830 may be increased or decreased based on an actual requirement, and a specific quantity is not limited in this embodiment.

In addition, the cabinet 800 further includes a fan assembly 820 for installing a heat dissipation fan and a cabinet management board 810 for managing the cabinet. The cabinet management board 810 is configured to manage a working status of the entire cabinet, for example, manage a power-on status, an operating temperature, and an alarm status of the cabinet.

As shown in FIG. 9, the communication board 830 includes a plurality of input/output interfaces, for example, a display interface 832 configured to connect to an external display, network interfaces 831 and 833 for connecting to a communication network, and a universal serial bus (Universal Serial Bus, USB) interface 834. The network interface 833 may be an Ethernet interface, and the network interface 831 may be a fiber interface.

In addition, the communication board 830 further includes a power interface 836 connected to a power supply and an extension slot 835 configured to extend a function of the communication board 830.

The communication apparatus implements different functions by installing different communication boards 830, for example, may implement functions of the first SEPP device and the second SEPP device in embodiments of this application. A control element such as a general-purpose processor/control chip/logic circuit is installed on the communication board 830. A memory such as a storage chip may also be installed on the communication board 830. The processor and the memory may cooperate with a related communication interface to perform some or all operations of any method that may be performed by the first SEPP device or the second SEPP device in embodiments of this application.

With reference to FIG. 10, from a perspective of entity hardware, the following describes a structure of a SEPP device provided in this application.

The SEPP device provided in this embodiment may be the first SEPP device or the second SEPP device in the foregoing method embodiment. For a specific process of performing the communication method in this application, refer to the foregoing method embodiment. Details are not described again.

The SEPP device may be a general-purpose computer, and includes a processor 1001, a memory 1002, a bus 1003, an input device 1004, an output device 1005, and a network interface 1006.

Specifically, the memory 1002 may include a computer storage medium in a form of a volatile and/or non-volatile memory, for example, a read-only memory and/or a random access memory. The memory 1002 may store an operating system, an application program, another program module, executable code, and program data.

The input device 1004 may be configured to input commands and information to the SEPP device. The input device 1004 may be, for example, a keyboard or a pointer device such as a mouse, a trackball, a touchpad, a microphone, a joystick, a game pad, a satellite television antenna, a scanner, or a similar device. These input devices may be connected to the processor 1001 by using the bus 1003.

The output device 1005 may be configured to output information by the SEPP device. In addition to a monitor, the output device 1005 may be another peripheral output device, for example, a speaker and/or a printing device. These output devices may also be connected to the processor 1001 by using the bus 1003.

The SEPP device may be connected to a communication network, for example, connected to a local area network (local area network, LAN), by using the network interface 1006. In a network connection environment, computer-executable instructions stored in the SEPP device may be stored in a remote storage device, and are not limited to being stored locally.

When the processor 1001 in the SEPP device executes the executable code or the application program stored in the memory 1002, the SEPP device may perform method operations on the first SEPP device side in the foregoing method embodiment, or may perform method operations on the second SEPP device side in the foregoing method embodiment. For a specific execution process, refer to the foregoing method embodiment. Details are not described herein again.

The computer may be implemented by using actual hardware, or may be implemented by using virtualized hardware, such as a virtual machine. The virtual machine provides virtual CPU, storage, network, and other resources. These virtual resources are obtained based on virtualization of an underlying hardware resource.

In this case, a software package corresponding to the SEPP device may be deployed on the virtual machine. The SEPP device may be referred to as a virtualized network function (virtualized network function, VNF) device. The NFV device may have same functional behaviors and external interfaces as a conventional network function device, for example, have an N32-F interface.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of the present invention.

## Claims

1. A communication method, wherein the method comprises:
receiving, by a first security edge protection proxy SEPP device, a roaming message from an IP exchange IPX operator device, wherein the roaming message is used to implement a roaming service between the first SEPP device and a second SEPP device; and
determining, by the first SEPP device, that the roaming message cannot be processed, and sending a feedback message to the IPX device, wherein the feedback message is used to indicate that the first SEPP device cannot process the roaming message.

2. The method according to claim 1, wherein the method further comprises:
when the first SEPP device and the second SEPP device have exchanged a target shared key by using an N32c link, releasing, by the first SEPP device, the N32c link, wherein the target shared key is used to implement secure communication between the first SEPP device and the second SEPP device.

3. The method according to claim 1 or 2, wherein before the receiving, by a first security edge protection proxy SEPP device, a roaming message from an IP exchange IPX operator device, the method further comprises:
sending, by the first SEPP device, a roaming request message to the IPX device, wherein the roaming request message is used to request the roaming service from the second SEPP device, and the roaming request message comprises an address of the second SEPP device; and
the roaming message is a roaming response message generated by the second SEPP device based on the roaming request message.

4. The method according to claim 3, wherein the method further comprises:
determining, by the first SEPP device, the address of the second SEPP device based on the roaming message, wherein the feedback message comprises the address of the second SEPP device, and the feedback message is used to indicate that the first SEPP device cannot process the roaming response message.

5. The method according to claim 1 or 2, wherein the roaming message is a roaming request message used to request the roaming service from the first SEPP device, and the roaming message comprises an address of the first SEPP device.

6. The method according to any one of claims 1 to 5, wherein the method further comprises:
if determining that the roaming message meets at least one of the following, determining, by the first SEPP device, that the first SEPP device cannot process the roaming message:
the roaming message cannot be decrypted, integrity check on the roaming message fails, integrity check on a modified block of the roaming message fails, a JSON patch program fails to be applied to the modified block of the roaming message, or a hypertext transfer protocol version 2 HTTP/2 message fails to be reconstructed based on the roaming message.

7. The method according to any one of claims 1 to 6, wherein the feedback message is further used to indicate a reason why the first SEPP device cannot process the roaming message.

8. The method according to any one of claims 1 to 7, wherein the feedback message comprises an N32f context identifier, and the N32f context identifier is used to indicate the target shared key used to decrypt the feedback message.

9. The method according to any one of claims 1 to 8, wherein after the determining, by the first SEPP device, that the roaming message cannot be processed, the method further comprises:
sending, by the first SEPP device, the feedback message to a network function NF.

10. A communication method, wherein the method comprises:
receiving, by a second security edge protection proxy SEPP device, a signaling message sent by a network function device NF, and sending a roaming message to an IP exchange IPX operator device, wherein the roaming message is used to implement a roaming service between the first SEPP device and the second SEPP device, and the roaming message comprises the signaling message; and
receiving, by the second SEPP device, a feedback message from the IPX device, wherein the feedback message is used to indicate that the first SEPP device cannot process the roaming message.

11. The method according to claim 10, wherein the method further comprises:
when the first SEPP device and the second SEPP device have exchanged a target shared key by using an N32c link, releasing, by the second SEPP device, the N32c link, wherein the target shared key is used to implement secure communication between the first SEPP device and the second SEPP device.

12. The method according to claim 10 or 11, wherein before the sending, by a second security edge protection proxy SEPP device, a roaming message to an IP exchange IPX operator device, the method further comprises:
receiving, by the second SEPP device, a roaming request message from the IPX device, wherein the roaming request message is used to request the roaming service from the second SEPP device, and the roaming request message comprises an address of the second SEPP device; and
generating, by the second SEPP device, a roaming response message based on the roaming request message, wherein the roaming response message is the roaming message.

13. The method according to claim 12, wherein the feedback message comprises the address of the second SEPP device, and the feedback message is used to indicate that the first SEPP device cannot process the roaming response message.

14. The method according to claim 10 or 11, wherein the roaming message is a roaming request message used to request the roaming service from the first SEPP device, and the roaming message comprises an address of the first SEPP device.

15. The method according to any one of claims 10 to 14, wherein the feedback message is further used to indicate a reason why the first SEPP device cannot process the roaming message.

16. The method according to claim 15, wherein the reason is at least one of the following:
the roaming message cannot be decrypted, integrity check on the roaming message fails, integrity check on a modified block of the roaming message fails, a JSON patch program fails to be applied to the modified block of the roaming message, or a hypertext transfer protocol version 2 HTTP/2 message fails to be reconstructed based on the roaming message.

17. The method according to any one of claims 10 to 16, wherein the feedback message comprises an N32f context identifier, and after the receiving, by the second SEPP device, a feedback message from the IPX device, the method further comprises:
obtaining, by the second SEPP device, the target shared key corresponding to the N32f context identifier; and
decrypting, by the second SEPP device, the feedback message by using the target shared key.

18. A security edge protection proxy SEPP device, wherein the SEPP device comprises:
a receiving unit, configured to receive a roaming message from an IP exchange IPX operator device, wherein the roaming message is used to implement a roaming service between the SEPP device and another SEPP device; and
a processing unit, configured to determine that the roaming message cannot be processed, and send a feedback message to the IPX device by using a sending unit, wherein the feedback message is used to indicate that the SEPP device cannot process the roaming message.

19. The device according to claim 18, wherein
the processing unit is further configured to: when the SEPP device and the another SEPP device have exchanged a target shared key by using an N32c link, release the N32c link, wherein the target shared key is used to implement secure communication between the SEPP device and the another SEPP device.

20. The device according to claim 18 or 19, wherein the sending unit is further configured to send a roaming request message to the IPX device, wherein the roaming request message is used to request the roaming service from the another SEPP device, the roaming request message comprises an address of the another SEPP device, and the roaming message is a roaming response message generated by the another SEPP device based on the roaming request message.

21. The device according to claim 20, wherein
the processing unit is further configured to determine the address of the another SEPP device based on the roaming message, wherein the feedback message comprises the address of the another SEPP device, and the feedback message is used to indicate that the SEPP device cannot process the roaming response message.

22. The device according to claim 18 or 19, wherein the roaming message is a roaming request message used to request the roaming service from the SEPP device, and the roaming message comprises an address of the SEPP device.

23. The device according to any one of claims 18 to 22, wherein
the processing unit is further configured to: if determining that the roaming message meets at least one of the following, determine that the processing unit cannot process the roaming message:
the roaming message cannot be decrypted, integrity check on the roaming message fails, integrity check on a modified block of the roaming message fails, a JSON patch program fails to be applied to the modified block of the roaming message, or a hypertext transfer protocol version 2 HTTP/2 message fails to be reconstructed based on the roaming message.

24. The device according to any one of claims 18 to 23, wherein the feedback message is further used to indicate a reason why the SEPP device cannot process the roaming message.

25. The device according to any one of claims 18 to 24, wherein the feedback message comprises an N32f context identifier, and the N32f context identifier is used to indicate the target shared key used to decrypt the feedback message.

26. The device according to any one of claims 18 to 25, wherein the sending unit is further configured to send the feedback message to a network function NF.

27. A security edge protection proxy SEPP device, wherein the SEPP device comprises a receiving unit, a sending unit, and a processing unit, wherein
the receiving unit is configured to receive a signaling message sent by a network function device NF;
the processing unit is configured to send a roaming message to an IP exchange IPX operator device by using the sending unit, wherein the roaming message is used to implement a roaming service between another SEPP device and the SEPP device, and the roaming message comprises the signaling message; and
the receiving unit is further configured to receive a feedback message from the IPX device, wherein the feedback message is used to indicate that the another SEPP device cannot process the roaming message.

28. The device according to claim 27, wherein
the processing unit is further configured to: when the another SEPP device and the SEPP device have exchanged a target shared key by using an N32c link, release, by the processing unit, the N32c link, wherein the target shared key is used to implement secure communication between the another SEPP device and the SEPP device.

29. The device according to claim 27 or 28, wherein
the receiving unit is further configured to receive a roaming request message from the IPX device, wherein the roaming request message is used to request the roaming service from the SEPP device, and the roaming request message comprises an address of the SEPP device; and
the processing unit is further configured to generate a roaming response message based on the roaming request message, wherein the roaming response message is the roaming message.

30. The device according to claim 29, wherein the feedback message comprises the address of the SEPP device, and the feedback message is used to indicate that the another SEPP device cannot process the roaming response message.

31. The device according to claim 27 or 28, wherein the roaming message is a roaming request message used to request the roaming service from the another SEPP device, and the roaming message comprises an address of the another SEPP device.

32. The device according to any one of claims 27 to 31, wherein the feedback message is further used to indicate a reason why the another SEPP device cannot process the roaming message.

33. The device according to claim 32, wherein the reason is at least one of the following:
the roaming message cannot be decrypted, integrity check on the roaming message fails, integrity check on a modified block of the roaming message fails, a JSON patch program fails to be applied to the modified block of the roaming message, or a hypertext transfer protocol version 2 HTTP/2 message fails to be reconstructed based on the roaming message.

34. The device according to any one of claims 27 to 33, wherein the processing unit is further configured to:
obtain the target shared key corresponding to an N32f context identifier; and
decrypt the feedback message by using the target shared key.

35. A security edge protection proxy SEPP device, comprising:
at least one processor and a memory coupled to each other, wherein the memory stores computer program code, and the processor invokes and executes the computer program code in the memory, to enable the SEPP device to perform the method according to any one of claims 1 to 17.

36. A computer-readable storage medium, wherein
the computer-readable storage medium stores a computer program, and when the computer program is executed by a processor, the method according to any one of claims 1 to 17 can be completed.

37. A communication system, comprising a first security edge protection proxy SEPP device and an IPX device, wherein
the IPX device is configured to send a roaming message to the first SEPP device, wherein the roaming message is used to implement a roaming service between the first SEPP device and a second SEPP device; and
the first SEPP device is configured to perform the method according to any one of claims 1 to 9.

38. A communication system, comprising a network function device NF and a second security edge protection proxy SEPP device, wherein the network function device NF is configured to perform a step of sending a signaling message to the second SEPP device; and
the second SEPP device is configured to perform the method according to any one of claims 10 to 17.
